# EUROPEAN PATENT SPECIFICATION

(11) **EP 4 471 322 B1**
(45) Date of publication and mention of the grant of the patent: **01.07.2026**
(21) Application number: 23176491.1
(22) Date of filing: 31.05.2023
(51) Int. Cl.: F17C 13/06

(54) **CRYOGENIC TANK WITH ACCESS OPENING, AND AIRCRAFT EQUIPPED THEREWITH**
KRYOGENER TANK MIT ZUGANGSÖFFNUNG UND DAMIT AUSGESTATTETES FLUGZEUG
RÉSERVOIR CRYOGÉNIQUE À OUVERTURE D'ACCÈS ET AÉRONEF ÉQUIPÉ DE CELUI-CI

(43) Date of publication of application: 04.12.2024
(73) Proprietor: Airbus Operations GmbH, 21129 Hamburg (DE)
(72) Inventor: Puschmann, Carsten, 21129 Hamburg (DE)
(74) Representative: KASTEL Patentanwälte PartG mbB

(56) References cited:
- EP-A1- 2 937 297
- WO-A1-2017/042424
- FR-A1- 3 106 190

## Description

The invention relates to a cryogenic tank, especially for an aircraft, comprising a multiple tank wall. Further the invention relates to an aircraft comprising such a LH2 tank.

According to preferred embodiments, the cryogenic tank is a liquid hydrogen (LH2) tank for storing liquid hydrogen.

For technical background, reference is made to the following literature:
DE 10 2014 107 316 A1
US 2021/0 078 702A1
WO 2021/148 335A1
US 2023/0 002 069 A1
EP 4 119 834 A1
EP 4 124 568 A1
EP 4 124 790 A1
Product Sheet: Demaco-Cryogenics Johnston Coupling, download on 23.05.2023
WO 2017/042424 A1
EP 2 937 297 A1

[1] to [3] relate to hydrogen installations in an aircraft. [4] to [7] relate to cryogenic tanks, especially liquid hydrogen tanks (LH2 tanks), for an aircraft and to aircrafts with such a cryogenic tank. [8] relates to a so-called Johnston coupling for coupling cryogenic pipe section. [9] and [10] each disclose a LNG tank having the features of the preamble of claim 1 wherein an inner cover panel closes an inner opening in an inner tank wall and a separated outer cover panel closes an outer opening in an outer tank wall.

Lightweight energy storage is a key topic for next generation aircrafts. Hydrogen offers high energy densities, whereas the storage technique (cryogenic, compressed, solid state/absorbed) is a key issue. Hydrogen can be compressed and/or cooled down to cryogenic temperatures to increase the volumetric and gravimetric energy density. Usually, complex tank systems are needed with individual requirements to the materials, design and working principle e.g., regarding operational safety.

Compressed and cryogenic hydrogen are the techniques of choice for to-day's vehicles, like cars or airplanes. Cryogenic tanks can achieve the lowest fuel volume / fuel mass ratio. LH2 tanks should have a very good thermal insulation.

It is the object of the invention to improve hydrogen tanks for use in vehicles, such as aircraft.

The object is achieved by the subject-matter of the independent claims. Preferred embodiments are subject-matter of the dependent claims.

The invention provides for a cryogenic tank, especially LH2 tank, comprising a multiple tank wall, an access opening in the multiple tank wall allowing access to an interior of the cryogenic tank for maintenance or repair services and a closure for closing the access opening,
wherein the multiple tank wall includes an inner tank wall skin, an outer tank wall skin and a tank wall vacuum insulation space between the inner tank wall skin and the outer tank wall skin,
wherein the removable closure comprises a multiple wall panel that includes an outer panel wall, an inner panel wall and a panel vacuum insulation space between the outer panel wall and the inner panel wall.

Preferably, the closure further includes a multiple wall closure ring with an outer closure ring wall, an inner closure ring wall and a closure ring vacuum insulation space between the outer and inner closure ring walls.

Preferably, a first end of the multiple wall closure ring is tightly closed and a second end of the multiple wall closure ring is tightly connected to the multiple wall panel so that the panel vacuum insulation space and the closure ring vacuum insulation space share a common interspace vacuum volume.

Preferably, the closure has a vacuum port for evacuation of the common interspace vacuum volume.

Preferably, a multilayer insulation is fitted inside the common interspace vacuum volume.

Preferably, the access opening in the multiple tank wall includes a multiple wall tank ring with an outer tank ring wall, an inner tank ring wall and a tank ring vacuum insulation space between the outer and inner tank ring walls.

Preferably, the ends of the multiple wall tank ring are tightly closed and the outer tank ring wall is tightly connected to the outer and inner tank wall skin so that the tank wall vacuum insulation space and the tank ring vacuum insulation space share a common interspace vacuum volume.

Preferably, the multiple wall closure ring is insertable in the tank multiple ring wall for closing the access opening.

Preferably, the inner side of the inner tank ring wall and the outer side of the outer closure ring wall have smooth surfaces configured to create of a tight fit between each other when the access opening is closed by the closure.

Preferably, the access opening has a tank flange and the closure has a closure flange which mates to the tank flange so that in a closed state the closure flange is tightly connected, especially by a number of bolt and screw assemblies, to the tank flange.

Preferably, at least one pipe runs through the closure and has a multiple wall pipe section fixed to the closure.

Preferably, the multiple wall section has an inner pipe wall and an outer pipe wall with a pipe vacuum insulation space therebetween.

Preferably, the pipe vacuum insulation space and the panel vacuum insulation space share a common interspace vacuum volume.

Preferably, the multiwall pipe section extends from the inner panel wall and the outer pipe wall is connected to the inner panel wall.

Alternatively, the multiwall pipe section extends from the outer panel wall and the outer pipe wall is connected to the outer panel wall.

Preferably, several of the pipes run through the closure and are fixed to the inner and outer panel walls as a structural support and/or in order to maintain the distance between the inner and outer panel walls.

According to another aspect, the invention provides an aircraft comprising a cryogenic tank according to any of the preceding embodiments.

Preferred embodiments of the invention relate to a vacuum insulated access panel for a cryogenic tank such as a liquid hydrogen tank (LH2 tank).

Preferred embodiments of the invention improve the design of a liquid hydrogen tank. Preferably, the tank is of the double wall vacuum insulated design, which is the state of art tank design for such applications. Embodiments of the invention allow to open the tank and get access to the inner part without breaking the tank vacuum. Preferred uses of such design are on hydrogen powered aircraft.

Currently, hydrogen tanks are completely closed, normally by welding. It is impossible to get access to the inner part of the tank without cutting the welds or the tank structure. Hence, equipment or installations inside the tank can only be maintained or replaced with a large effort. As a consequence, normally the complete tank needs to be removed from the aircraft and repaired in a shop outside the aircraft.

Some conventional aircraft fuel tanks have access openings allowing access to the interior of the fuel tank on board of the aircraft for repair and maintenance purposes. With embodiments of the invention, such a tank access for maintenance and repair can now also be provided for liquid hydrogen tanks or other cryogenic tank to be used on aircrafts. In embodiments of the invention, the tank access opening is closed by a closure including a panel. In some embodiments, this panel is double walled and vacuum insulated. The panel is designed and fitted to the tank in manner that the heat ingress into the cold hydrogen is minimised.

Embodiments of the invention are explained below referring to the accompanying drawings in which:
- Fig. 1: depicts an aircraft having a cryogenic tank;
- Fig. 2: is a sectional view through a part of the cryogenic tank (e.g., a top part) with an access opening and a closure for this access opening in a closed state;
- Fig. 3: is a sectional view as in Fig. 2 wherein the access opening and the closure are in an open state;
- Fig. 4: is a perspective view of the part of the cryogenic tank with the access opening and the closure in the closed state; and
- Fig. 5: is a perspective view of the part of the cryogenic tank with the access opening and the closure in the open state.

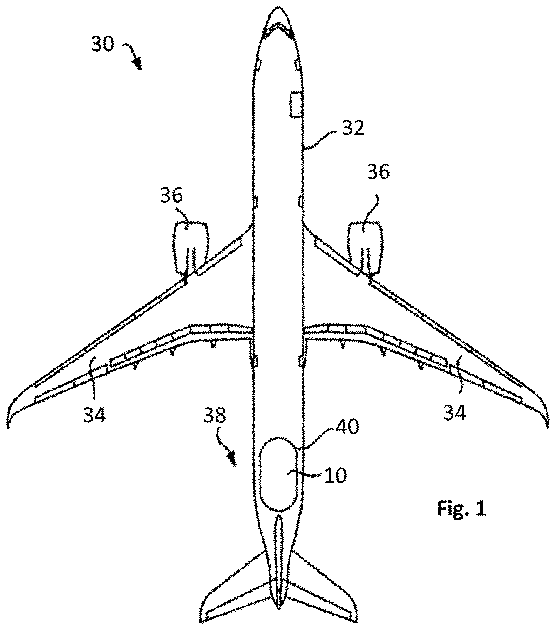

Referring to Fig. 1, an aircraft 30 comprises a fuselage 32. The aircraft 30 further comprises a pair of wings 34 that are attached to the fuselage 32. Furthermore, an engine 36 is attached to each wing 34.

The aircraft 30 comprises an aft section 38, which includes a horizontal and vertical tail plane. Furthermore, the aircraft 30 comprises a tank arrangement 40. The tank arrangement 40 includes a cryogenic tank 10 that is preferably arranged in the aft section 38. It should be noted that the cryogenic tank 10 may have a different shape and/or be located in a different section of the aircraft 30.

The tank 10 includes hydrogen fuel that can be directly fed to the engines 36. The hydrogen fuel may also be fed to fuel cells (not depicted) where the hydrogen is converted into electrical energy, and the electrical energy is then fed to the engines 36. The hydrogen fuel is stored in the tank 10 in the form of a cryogenic liquid, i.e., liquid hydrogen (LH2).

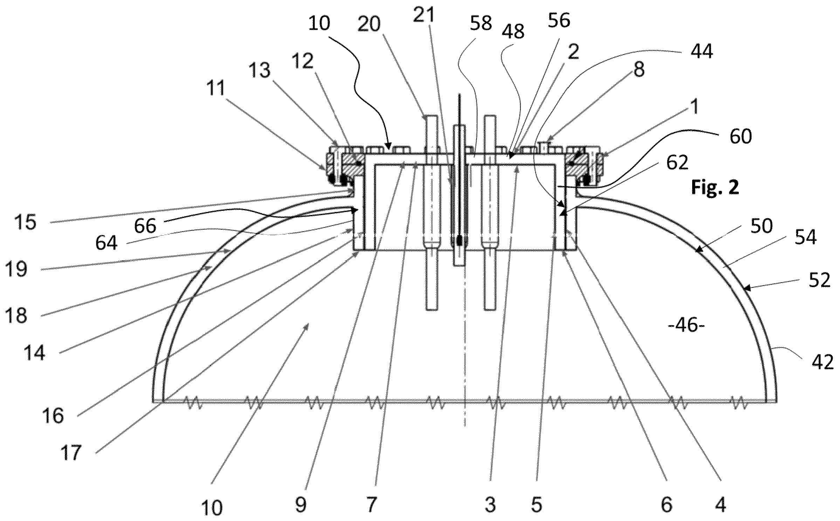

Referring to Figs. 2 to 5, an embodiment of the cryogenic tank 10 is explained in more detail.

The cryogenic tank 10 comprises a multiple tank wall 42, an access opening 44 in the multiple tank wall 42 allowing access to an interior 46 of the cryogenic tank 10 for maintenance or repair services and a closure 48 for closing the access opening 44.

In the embodiment shown, the cryogenic tank 10 is a double walled tank 10 wherein the multiple tank wall 42 includes an inner tank wall skin 50, an outer tank wall skin 52 and a tank wall vacuum insulation space 54 between the inner tank wall skin 50 and the outer tank wall skin 52.

The closure 48 comprises a multiple wall panel 56 that includes an outer panel wall 2, an inner panel wall 3 and a panel vacuum insulation space 58 between the outer panel wall 2 and the inner panel wall 3.

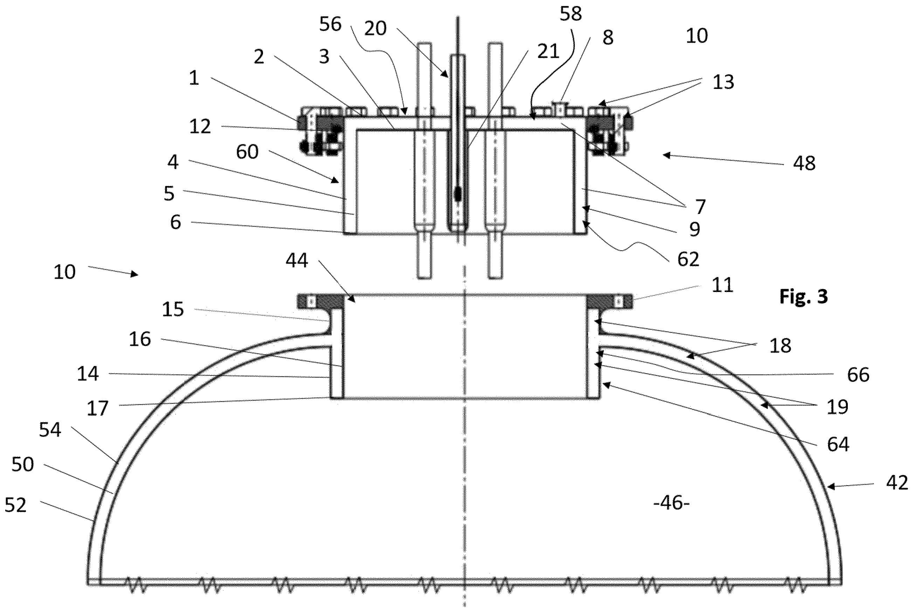

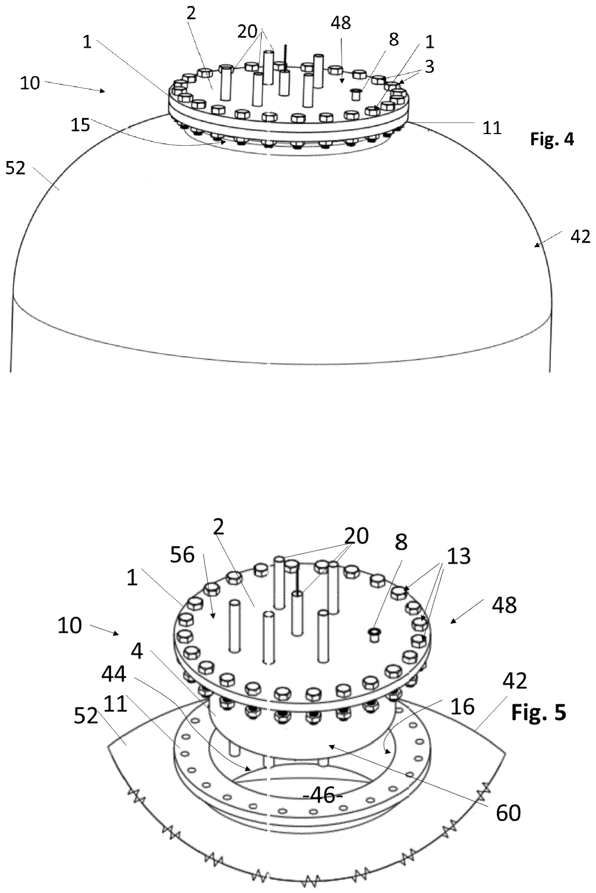

In the embodiments shown, the access opening 44 is arranged in a top part of the cryogenic tank 10. Fig. 2 shows a sectional view through this top part in the closed state, Fig. 3 shows the sectional view in the open state; Fig. 4 shows a perspective view in the closed state and Fig. 5 shows the perspective view in the open state.

In the embodiments shown, the multiple wall panel 56 is a double walled access panel. This panel 56 has a panel flange 1, an upper wall as the outer panel wall 2 and a lower wall as the inner panel wall 3.

In some embodiments, the closure 48 further includes a multiple wall closure ring 60 with an outer closure ring wall 4, an inner closure ring wall 5 and a closure ring vacuum insulation space 62 between the outer and inner closure ring walls 4, 5.

Referring to Figs. 2 to 5, the multiple wall closure ring 60 is a kind of "shaft" attached to panel 56. This shaft consists of an outer ring as outer closure ring wall 4, an inner ring as inner closure ring wall 5 and a lower closing plate 6. All these parts 1, 2, 3, 4, 5 and 6 are welded together to create a single closure interspace volume 7 - constituted, e.g., by the panel vacuum insulation space 58 and the closure ring vacuum insulating space 62 that are combined in fluid communication at the edge region of the closure 44. The air in this volume 7 can be extracted through a vacuum port 8. A Multi Layer Insulation (MLI - not shown in detail) 9 is fitted inside the closure interspace volume 7.

On the side of the multiple tank wall 42 there is another flange - tank flange 11 - mounted at the multiple tank wall 42, that meets the panel flange 1. A seal 12 is installed between the tank flange 11 and the panel flange 1. The flanges 1, 11 are bolted together by a number of bolt and screw assemblies 13.

In some embodiments, the multiple tank wall 42 includes a multiple wall tank ring 64 with an outer tank ring wall arrangement 14, 15, an inner tank ring wall 16 and a tank ring vacuum insulation space 66 between the outer and inner tank ring walls 14, 15, 16. In some embodiments, the outer tank ring wall arrangement comprises an inside outer tank ring wall 14 arranged inside of the inner tank wall skin 50 and an outside outer tank ring wall 15 arranged outside of the outer tank wall skin 52. In the embodiments shown, the multiple wall tank ring 50 is a kind of "shaft" connected to the tank flange 11. This shaft consists of the inside outer tank ring wall 14 (e.g., a lower outer ring made from the tank wall material), the outside outer tank ring wall 15 (e.g., an upper outer ring made from the tank wall material), the inner tank ring wall 16 (e.g., an inner ring made from the tank wall material), and an inside closing plate 17 (e.g., a lower closing plate made from the tank wall material for closing the inside end of the multiple wall tank ring 64). The other end of the multiple tank ring wall 64 is tightly closed by the tank flange 11.

All the tank side parts 11, 14, 15, 16, 17, 50, and 52 are welded to form the multiple tank wall 42 with the access opening 44 defined by the multiple wall tank ring 64. A single tank wall interspace volume 18 is created within the multiple tank wall 42. In other words, the vacuum insulation spaces 54, 66 between the skins 46, 48 and between the tank ring walls 14, 15, 16 are combined into the single tank wall interspace volume 18. This tank wall interspace volume 18 is also thermally insulated by a Multi Layer Insulation (MLI - not shown in detail) 19.

The outer side of the outer closure ring wall 4 and the inner side of the inner tank ring wall 16 have smooth surface which are, in the closed state, in close contact to each other such that a tight fit is created. A seal 12 is installed at the panel flange 1 to avoid hydrogen from leaking out of the tank 10.

Pipes 20 that are running into the cryogenic tank 10 are routed through the access panel 56. The pipes 20 are fitted with a double walled section 21 to minimise heat ingress along the pipes 20. This double walled section 21 is at one end - here shown at the top - open into the closure interspace volume 7 and creates a common vacuum with the other parts of the panel 56. At the other end - here shown at the bottom - it is closed to the pipe by welding (not shown). The interior of the double walled section 21 is insulated by Multi Layer Insulation (MLI - not shown).

The pipes 20 also serve as a structural support, they ensure the distance between the outer panel wall 2 and the inner panel wall 3.

In the embodiments shown, the double walled section 21 extends into the interior 46 of the tank, it is also possible that double walled section is arranged outside for thermally insulating a cold inner pipe running into the interior of the tank.

A cryogenic tank (10) for an aircraft (30) has been described which is providing a tank access for maintenance, inspection and repair inside the tank onboard of the aircraft (30). An access opening (44) is closed by a removable closure (48) including a multiple wall panel (56) which is vacuum insulated and which is designed and fitted to the multiple tank wall (42) in a manner that the heat ingress into the cryogenic tank (10) is minimized. An advantage is that no vacuum is impacted by opening and closing the removable closure (48).

### Reference sign list:

- 1: panel flange
- 2: outer panel wall
- 3: inner panel wall
- 4: outer closure ring wall
- 5: inner closure ring wall
- 6: closure plate
- 7: closure interspace volume
- 8: vacuum port
- 9: Multi Layer Insulation (in closure interspace volume)
- 10: cryogenic tank
- 11: tank flange
- 12: seal
- 13: bolt and screw arrangement
- 14: inside outer tank ring wall
- 15: outside outer tank ring wall
- 16: inner tank ring wall
- 17: end plate (of the multiple wall tank ring)
- 18: tank wall interspace volume
- 19: Multi Layer Insulation (in the tank wall interspace volume)
- 20: pipe
- 21: double wall section
- 30: aircraft
- 32: fuselage
- 34: wing
- 36: engine
- 38: aft section
- 40: tank arrangement
- 42: multiple tank wall (e.g., double tank wall)
- 44: access opening
- 46: interior of the tank
- 48: closure
- 50: inner tank wall skin
- 52: outer tank wall skin
- 54: tank wall insulation space
- 56: panel
- 58: panel vacuum insulation space
- 60: multiple wall closure ring
- 62: closure ring vacuum insulation space
- 64: multiple wall tank ring
- 66: tank ring vacuum insulation space

## Claims

1. Cryogenic tank (10) comprising a multiple tank wall (42), an access opening (44) in the multiple tank wall (42) allowing access to an interior (46) of the cryogenic tank (10) for maintenance, repair and/or replacement services and a removable closure (48) for closing the access opening (44),
wherein the multiple tank wall (42) includes an inner tank wall skin (50), an outer tank wall skin (52) and a tank wall vacuum insulation space (54) between the inner tank wall skin (50) and the outer tank wall skin (52),
**characterized in that** the removable closure (48) comprises a multiple wall panel (56) that includes an outer panel wall (2), an inner panel wall (3) and a panel vacuum insulation space (58) between the outer panel wall (2) and the inner panel wall (3).

2. Cryogenic tank (10) according to claim 1, **characterized in that** the closure (48) comprises the multiple wall (56) including the outer panel wall (2), the inner panel wall (3) and the panel vacuum insulation space (58) both in the open and closed state of the access opening (44) and the closure (48).

3. Cryogenic tank (10) according to claim 1 or 2, **characterized in that** the closure (48) further includes a multiple wall closure ring (60) with an outer closure ring wall (4), an inner closure ring wall (5) and a closure ring vacuum insulation space (62) between the outer and inner closure ring walls (4, 5).

4. Cryogenic tank (10) according to claim 3, **characterized in that** a first end of the multiple wall closure ring (60) is tightly closed and a second end of the multiple wall closure ring (60) is tightly connected to the multiple wall panel (56) so that the panel vacuum insulation space (58) and the closure ring vacuum insulation space (62) form a single closure interspace vacuum volume (7).

5. Cryogenic tank (10) according to claim 4, **characterized in that**
5.1 the closure (48) has a vacuum port (8) for evacuation of the closure interspace vacuum volume (7); and/or
5.2 a multilayer insulation (9) is fitted inside the closure interspace vacuum volume (7).

6. Cryogenic tank (10) according to any of the preceding claims, **characterized in that** the access opening (44) in the multiple tank wall (42) is defined by a multiple wall tank ring (64) with an outer tank ring wall arrangement (14, 15), an inner tank ring wall (16) and a tank ring vacuum insulation space (66) between the outer and inner tank ring walls (14, 15, 16).

7. Cryogenic tank (10) according to claim 6, **characterized in that**
7.1 the ends of the multiple wall tank ring (64) are tightly closed, and/or
7.2 the outer tank ring wall arrangement comprises an inside outer tank ring wall (14) arranged inside the inner tank wall skin (50) and an outside outer tank ring wall (15) arranged outside the outer tank wall skin (52); and/or
7.3 the outer tank ring wall arrangement (14, 15) is tightly connected to the outer and inner tank wall skin (50, 52) so that the tank wall vacuum insulation space (54) and the tank ring vacuum insulation space (66) are in fluid communication with each other and/or form a single tank wall interspace vacuum volume (18).

8. Cryogenic tank (10) according to any of the claims 6 or 7 and any of the claims 3 to 5, **characterized in that**
8.1 the multiple wall closure ring (64) is insertable in the multiple wall tank ring (64) for closing the access opening (44); and/or
8.2 the inner side of the inner tank ring wall (16) and the outer side of the outer closure ring wall (4) have smooth surfaces configured to create of a tight fit between each other when the access opening (44) is closed by the closure (48).

9. Cryogenic tank (10) according to any of the preceding claims, **characterized in that** the access opening (44) has a tank flange (11) and the closure (48) has a closure flange (1) which mates to the tank flange (11) so that in a closed state the closure flange (1) is tightly connected, especially by a number of bolt and screw assemblies (13), to the tank flange (11).

10. Cryogenic tank (10) according to any of the preceding claims **characterized in that** at least one pipe (20) runs through the closure (48) and has a multiple wall pipe section (21) fixed to the closure (48).

11. Cryogenic tank (10) according to claim 10 **characterized in that** the multiple wall section (21) has an inner pipe wall and an outer pipe wall with a pipe vacuum insulation space therebetween, especially such that
11.1 the pipe vacuum insulation space is in fluid communication with the panel vacuum insulation space, and/or
11.2 the multiwall pipe section (21) extends from the inner panel wall (3) and the outer pipe wall is connected to the inner panel wall (3) or
11.3 the multiwall pipe section (21) extends from the outer panel wall (2) and the outer pipe wall is connected to the outer panel wall (2).

12. Cryogenic tank (10) according to claim 10 or 11 **characterized in that** that several of the pipes (20) run through the closure (48) and are fixed to the inner and outer panel walls (2, 3) as a structural support and/or in order to maintain the distance between the inner and outer panel walls (2, 3).

13. Aircraft (20) comprising a cryogenic tank (10) according to any of the preceding claims.

## Patentansprüche

1. Kryogener Tank (10), umfassend eine Mehrfachtankwand (42), eine Zugangsöffnung (44) in der Mehrfachtankwand (42), die Zugang zu einem Innenraum (46) des kryogenen Tanks (10) für Wartungs-, Reparatur- und/oder Austauscharbeiten ermöglicht, und einen entfernbaren Verschluss (48) zum Schließen der Zugangsöffnung (44),
wobei die Mehrfachtankwand (42) eine innere Tankwandhaut (50), eine äußere Tankwandhaut (52) und einen Tankwandvakuumisolationsraum (54) zwischen der inneren Tankwandhaut (50) und der äußeren Tankwandhaut (52) enthält,
**dadurch gekennzeichnet, dass** der entfernbare Verschluss (48) eine Mehrfachwandplatte (56) umfasst, die eine äußere Plattenwand (2), eine innere Plattenwand (3) und einen Plattenvakuumisolationsraum (58) zwischen der äußeren Plattenwand (2) und der inneren Plattenwand (3) enthält.

2. Kryogener Tank (10) nach Anspruch 1, **dadurch gekennzeichnet, dass** der Verschluss (48) sowohl im offenen als auch im geschlossenen Zustand der Zugangsöffnung (44) und des Verschlusses (48) die Mehrfachwand (56) einschließlich der äußeren Plattenwand (2), der inneren Plattenwand (3) und des Plattenvakuumisolationsraums (58) umfasst.

3. Kryogener Tank (10) nach Anspruch 1 oder 2, **dadurch gekennzeichnet, dass** der Verschluss (48) ferner einen mehrwandigen Verschlussring (60) mit einer äußeren Verschlussringwand (4), einer inneren Verschlussringwand (5) und einem Verschlussringvakuumisolationsraum (62) zwischen der äußeren und inneren Verschlussringwand (4, 5) umfasst.

4. Kryogener Tank (10) nach Anspruch 3, **dadurch gekennzeichnet, dass** ein erstes Ende des mehrwandigen Verschlussrings (60) dicht verschlossen ist und ein zweites Ende des mehrwandigen Verschlussrings (60) dicht mit der Mehrfachwandplatte (56) verbunden ist, so dass der Plattenvakuumisolationsraum (58) und der Verschlussringvakuumisolationsraum (62) ein einzelnes Verschlusszwischenraumvakuumvolumen (7) bilden.

5. Kryogener Tank (10) nach Anspruch 4, **dadurch gekennzeichnet, dass**
5.1 der Verschluss (48) einen Vakuumanschluss (8) zum Evakuieren des Verschlusszwischenraumvakuumvolumens (7) aufweist und/oder
5.2 eine Mehrschichtisolation (9) innerhalb des Verschlusszwischenraumvakuumvolumens (7) angebracht ist.

6. Kryogener Tank (10) nach einem der vorhergehenden Ansprüche, **dadurch gekennzeichnet, dass** die Zugangsöffnung (44) in der Mehrfachtankwand (42) durch einen mehrwandigen Tankring (64) mit einer äußeren Tankringwandanordnung (14, 15), einer inneren Tankringwand (16) und einem Tankringvakuumisolationsraum (66) zwischen der äußeren und inneren Tankringwand (14, 15, 16) definiert ist.

7. Kryogener Tank (10) nach Anspruch 6, **dadurch gekennzeichnet, dass**
7.1 die Enden des mehrwandigen Tankrings (64) dicht verschlossen sind und/oder
7.2 die äußere Tankringwandanordnung eine innenseitige äußere Tankringwand (14), die innerhalb der inneren Tankwandhaut (50) angeordnet ist, und eine außenseitige äußere Tankringwand (15), die außerhalb der äußeren Tankwandhaut (52) angeordnet ist, umfasst; und/oder
7.3 die äußere Tankringwandanordnung (14, 15) dicht mit der äußeren und inneren Tankwandhaut (50, 52) verbunden ist, so dass der Tankwandvakuumisolationsraum (54) und der Tankringvakuumisolationsraum (66) miteinander in Fluidverbindung stehen und/oder ein einzelnes Tankwandzwischenraumvakuumvolumen (18) bilden.

8. Kryogener Tank (10) nach einem der Ansprüche 6 oder 7 und einem der Ansprüche 3 bis 5, **dadurch gekennzeichnet, dass**
8.1 der mehrwandige Verschlussring (64) zum Verschließen der Zugangsöffnung (44) in den mehrwandigen Tankring (64) einsetzbar ist und/oder
8.2 die Innenseite der inneren Tankringwand (16) und die Außenseite der äußeren Verschlussringwand (4) glatte Flächen aufweisen, die dazu ausgebildet sind, einen festen Sitz zwischen einander zu erzeugen, wenn die Zugangsöffnung (44) durch den Verschluss (48) verschlossen wird.

9. Kryogener Tank (10) nach einem der vorhergehenden Ansprüche, **dadurch gekennzeichnet, dass** die Zugangsöffnung (44) einen Tankflansch (11) aufweist und der Verschluss (48) einen Verschlussflansch (1) aufweist, der mit dem Tankflansch (11) zusammenpasst, so dass der Verschlussflansch (1) in einem geschlossenen Zustand fest, insbesondere durch mehrere Bolzen- und Schraubverbindungen (13), mit dem Tankflansch (11) verbunden ist.

10. Kryogener Tank (10) nach einem der vorhergehenden Ansprüche, **dadurch gekennzeichnet, dass** mindestens ein Rohr (20) durch den Verschluss (48) verläuft und einen am Verschluss (48) befestigten mehrwandigen Rohrabschnitt (21) aufweist.

11. Kryogener Tank (10) nach Anspruch 10, **dadurch gekennzeichnet, dass** der mehrwandige Abschnitt (21) eine innere Rohrwand und eine äußere Rohrwand mit einem Rohrvakuumisolationsraum dazwischen aufweist, insbesondere derart, dass
11.1 der Rohrvakuumisolationsraum mit dem Plattenvakuumisolationsraum in Fluidverbindung steht und/oder
11.2 sich der mehrwandige Rohrabschnitt (21) von der inneren Plattenwand (3) erstreckt und die äußere Rohrwand mit der inneren Plattenwand (3) verbunden ist oder
11.3 sich der mehrwandige Rohrabschnitt (21) von der äußeren Plattenwand (2) erstreckt und die äußere Rohrwand mit der äußeren Plattenwand (2) verbunden ist.

12. Kryogener Tank (10) nach Anspruch 10 oder 11, **dadurch gekennzeichnet, dass** mehrere der Rohre (20) durch den Verschluss (48) verlaufen und als konstruktiver Träger und/oder zur Aufrechterhaltung des Abstands zwischen der inneren und äußeren Plattenwand (2, 3) an der inneren und äußeren Plattenwand (2, 3) befestigt sind.

13. Flugzeug (20), das einen kryogenen Tank (10) nach einem der vorhergehenden Ansprüche umfasst.

## Revendications

1. Réservoir cryogénique (10) comprenant une paroi de réservoir multiple (42), une ouverture d'accès (44) dans la paroi de réservoir multiple (42) permettant l'accès à un intérieur (46) du réservoir cryogénique (10) pour des services de maintenance, de réparation et/ou de remplacement et une fermeture amovible (48) pour fermer l'ouverture d'accès (44),
la paroi de réservoir multiple (42) comprenant un revêtement de paroi de réservoir interne (50), un revêtement de paroi de réservoir externe (52) et un espace d'isolation sous vide de paroi de réservoir (54) entre le revêtement de paroi de réservoir interne (50) et le revêtement de paroi de réservoir externe (52),
**caractérisé en ce que** la fermeture amovible (48) comprend un panneau à parois multiples (56) qui comprend une paroi de panneau externe (2), une paroi de panneau interne (3) et un espace d'isolation sous vide de panneau (58) entre la paroi de panneau externe (2) et la paroi de panneau interne (3).

2. Réservoir cryogénique (10) selon la revendication 1, **caractérisé en ce que** la fermeture (48) comprend la paroi multiple (56) comportant la paroi de panneau externe (2), la paroi de panneau interne (3) et l'espace d'isolation sous vide de panneau (58) tant à l'état ouvert que fermé de l'ouverture d'accès (44) et de la fermeture (48).

3. Réservoir cryogénique (10) selon la revendication 1 ou 2, **caractérisé en ce que** la fermeture (48) comprend en outre une bague de fermeture à parois multiples (60) dotée d'une paroi de bague de fermeture externe (4), d'une paroi de bague de fermeture interne (5) et d'un espace d'isolation sous vide de bague de fermeture (62) entre les parois de bague de fermeture externe et interne (4, 5).

4. Réservoir cryogénique (10) selon la revendication 3, **caractérisé en ce qu'**une première extrémité de la bague de fermeture à parois multiples (60) est fermée de manière étanche et une seconde extrémité de la bague de fermeture à parois multiples (60) est reliée de manière étanche au panneau à parois multiples (56) de sorte que l'espace d'isolation sous vide de panneau (58) et l'espace d'isolation sous vide de bague de fermeture (62) forment un volume sous vide intermédiaire de fermeture (7) unique.

5. Réservoir cryogénique (10) selon la revendication 4, **caractérisé en ce que**
5.1 la fermeture (48) comporte un orifice de vide (8) pour évacuer le volume sous vide intermédiaire de fermeture (7) ; et/ou
5.2 un isolant multicouche (9) est monté à l'intérieur du volume sous vide intermédiaire de fermeture (7).

6. Réservoir cryogénique (10) selon l'une quelconque des revendications précédentes, **caractérisé en ce que** l'ouverture d'accès (44) dans la paroi de réservoir multiple (42) est définie par une bague de réservoir à parois multiples (64) dotée d'un agencement de paroi de bague de réservoir externe (14, 15), d'une paroi de bague de réservoir interne (16) et d'un espace d'isolation sous vide de bague de réservoir (66) entre les parois de bague de réservoir externe et interne (14, 15, 16).

7. Réservoir cryogénique (10) selon la revendication 6, **caractérisé en ce que**
7.1 les extrémités de la bague de réservoir à parois multiples (64) sont fermées hermétiquement, et/ou
7.2 l'agencement de paroi de bague de réservoir externe comprend une paroi de bague externe interne (14) disposée à l'intérieur du revêtement de paroi de réservoir interne (50) et une paroi de bague de réservoir externe (15) disposée à l'extérieur du revêtement de paroi de réservoir externe (52) ; et/ou
7.3 l'agencement de paroi de bague de réservoir externe (14, 15) est relié de manière étanche au revêtement de paroi de réservoir externe et interne (50, 52) de sorte que l'espace d'isolation sous vide de paroi de réservoir (54) et l'espace d'isolation sous vide de bague de réservoir (66) soient en communication fluidique l'un avec l'autre et/ou forment un volume sous vide intermédiaire de paroi de réservoir (18) unique.

8. Réservoir cryogénique (10) selon l'une quelconque des revendications 6 ou 7 et l'une quelconque des revendications 3 à 5, **caractérisé en ce que**
8.1 la bague de fermeture à parois multiples (64) peut être inséré dans la bague de réservoir à parois multiples (64) pour fermer l'ouverture d'accès (44) ; et/ou
8.2 le côté interne de la paroi de bague de réservoir interne (16) et le côté externe de la paroi de bague de fermeture externe (4) présentent des surfaces lisses conçues pour créer un ajustement étanche l'une entre l'autre lorsque l'ouverture d'accès (44) est fermée par la fermeture (48).

9. Réservoir cryogénique (10) selon l'une quelconque des revendications précédentes, **caractérisé en ce que** l'ouverture d'accès (44) présente une bride de réservoir (11) et la fermeture (48) présente une bride de fermeture (1) qui s'accouple à la bride de réservoir (11) de sorte que, dans un état fermé, la bride de fermeture (1) soit reliée de manière étanche, en particulier par un certain nombre d'ensembles boulon et vis (13), à la bride de réservoir (11).

10. Réservoir cryogénique (10) selon l'une quelconque des revendications précédentes, **caractérisé en ce qu'**au moins un tuyau (20) passe à travers la fermeture (48) et présente une section de tuyau à parois multiples (21) fixée à la fermeture (48).

11. Réservoir cryogénique (10) selon la revendication 10, **caractérisé en ce que** la section à parois multiples (21) présente une paroi de tuyau interne et une paroi de tuyau externe avec un espace d'isolation sous vide de tuyau entre elles, en particulier de sorte que
11.1 l'espace d'isolation sous vide de tuyau soit en communication fluidique avec l'espace d'isolation sous vide de panneau, et/ou
11.2 la section de tuyau à parois multiples (21) s'étende à partir de la paroi de panneau interne (3) et la paroi de tuyau externe soit reliée à la paroi de panneau interne (3) ou
11.3 la section de tuyau à parois multiples (21) s'étende à partir de la paroi de panneau externe (2) et la paroi de tuyau externe soit reliée à la paroi de panneau externe (2).

12. Réservoir cryogénique (10) selon la revendication 10 ou 11, **caractérisé en ce que** plusieurs des tuyaux (20) passent à travers la fermeture (48) et sont fixés aux parois de panneau interne et externe (2, 3) en tant que support structurel et/ou pour maintenir la distance entre les parois de panneau interne et externe (2, 3).

13. Aéronef (20) comprenant un réservoir cryogénique (10) selon l'une quelconque des revendications précédentes.
